# DEMANDE DE BREVET EUROPEEN

(11) **EP 2 579 177 A1**
(43) Date de publication de la demande: **10.04.2013**
(21) Numéro de dépôt: 12187439.0
(22) Date de dépôt: 05.10.2012
(51) Int. Cl.: G06F 21/00

(54) **Terminal mobile apte à modifier dynamiquement son niveau de sécurité et procédé de sécurisation associé**

(30) Priorité: 06.10.2011 FR 1103044
(71) Demandeur: Thales, 92200 Neuilly Sur Seine (FR)
(72) Inventeur: Bioteau, Adrien, 44230 SAINT SEBASTIEN SUR LOIRE (FR); Frerebeau, Laurent, 78000 VERSAILLES (FR)
(74) Mandataire: Labatte, Laurent

(57) **Abrégé**

La présente invention concerne un procédé de sécurisation d'un terminal de communication mobile apte à exécuter des applications (123, 124) sur une machine virtuelle (111) faisant interface entre lesdites applications à exécuter et un système d'exploitation (113), la machine virtuelle (111) exécutant des méthodes natives configurées pour pointer sur des fonctions exécutées hors machine virtuelle et susceptibles de manipuler des données sensibles, le procédé comprenant une étape d'affectation aux dites méthodes natives de pointeurs sur des fonctions (117a, 117b) sélectionnées en fonction d'un niveau de sécurité choisi par l'utilisateur dudit terminal. Le terminal est optionnellement configuré pour produire un indicateur de sécurité à l'utilisateur, l'aspect dudit indicateur étant dépendant du mode de sécurité dans lequel est activé l'application en cours d'utilisation. L'invention s'applique notamment à la protection de données sensibles manipulées par des terminaux de communication mobiles.

## Description

La présente invention concerne un terminal mobile apte à modifier dynamiquement son niveau de sécurité et un procédé de sécurisation associé. Elle s'applique notamment à la protection de données sensibles manipulées par des terminaux de communication mobiles, tels que des téléphones ou des tablettes numériques, en particulier dans un contexte d'utilisation mixte dans lequel le terminal peut être utilisé aussi bien pour exploiter des données personnelles anodines que pour opérer sur des données confidentielles.

Les vols ou intrusions dans les terminaux mobiles constituent des menaces pour le respect de la confidentialité des données exploitées ou enregistrées sur un terminal de communication mobile. Des moyens efficaces pour protéger les données contre des divulgations importunes sont donc recherchés. Certaines architectures de terminaux mobiles ont été développées nativement pour prendre en charge des fonctions permettant d'assurer la sécurité des applications. D'autres architectures ont été davantage axées sur l'ergonomie et les fonctionnalités d'intérêt pour le grand public.

Parmi les terminaux mobiles non sécurisés nativement, certains sont conçus autour d'une architecture s'appuyant sur le système d'exploitation Linux, bien connu des développeurs évoluant dans le milieu du logiciel libre. Un exemple de système exploité à l'heure actuelle sur un grand nombre d'appareils mobile est le système appelé « Android™ » développé par la société éponyme puis racheté par la société Google Inc. Pour faciliter le développement d'applications sur ce type de système et leur portabilité sur d'autres plateformes, une machine virtuelle est placée en interface entre le système d'exploitation - dans l'exemple, Linux - et les applications. Cette machine virtuelle est un environnement d'exécution nommé « Dalvik™ » dans le cas du système Android™.

Une première méthode de sécurisation du terminal consiste à sécuriser les applications exécutées sur ce terminal. Cependant, cette méthode doit être réitérée pour chaque application ; de plus, il faut disposer du code source ou binaire de ces applications, lequel code n'est pas toujours disponible au développeur.

Une deuxième méthode vise à modifier le noyau du système d'exploitation. Cette opération de modification doit toutefois être renouvelée pour chaque terminal. En outre, cette modification ne permet pas de modifier dynamiquement le mode de sécurité pendant le fonctionnement du terminal.

Par ailleurs, les fonctions de sécurité peuvent dans certains cas, limiter l'utilisation du terminal. Par exemple, un utilisateur ayant reçu des données personnelles sur son terminal et souhaitant les transférer sur son ordinateur personnel devrait d'abord déchiffrer ces données pour les transférer. Or, lorsque le terminal est utilisé à des fins personnelles, l'utilisateur souhaite pouvoir exploiter les applications qu'il offre sans entrave.

Un but de l'invention est de sécuriser un terminal mobile exploitant une machine virtuelle sans devoir modifier les applications qui s'exécutent sur ce terminal et en limitant, voire en évitant les modifications apportées au système d'exploitation du terminal. Plus particulièrement, sur un environnement de type Android, un objectif est de circonscrire ces modifications dans l'environnement d'exécution Dalvik. A cet effet, l'invention a pour objet un procédé de sécurisation d'un terminal de communication mobile apte à exécuter des applications sur une machine virtuelle faisant interface entre lesdites applications à exécuter et un système d'exploitation, la machine virtuelle exécutant des méthodes natives configurées pour pointer sur des fonctions exécutées hors machine virtuelle et susceptibles de manipuler des données sensibles, le procédé étant **caractérisé en ce qu'il** comprend une étape d'affectation aux dites méthodes natives de pointeurs sur des fonctions sélectionnées en fonction d'un niveau de sécurité choisi par l'utilisateur dudit terminal.

En d'autres termes, dans un premier temps, l'utilisateur du terminal choisit le niveau de sécurité des applications à exécuter en activant une interface homme-machine dudit terminal (par exemple en actionnant un bouton du téléphone mobile, par commande vocale, ou tout autre moyen adapté) ; dans un deuxième temps, on affecte aux dites méthodes natives des pointeurs sur des fonctions sélectionnées en fonction du niveau de sécurité choisi par ledit utilisateur.

Le procédé selon l'invention permet de modifier dynamiquement le niveau de sécurité du terminal, sans devoir modifier les applications ou le noyau du système d'exploitation. Le terminal, qui dans sa conception initiale n'est pas prévu pour protéger des données confidentielles, peut être activé selon au moins deux niveaux de sécurité différents, par exemple un niveau non sécurisé dans lequel les fonctions appelées par les méthodes natives sont dépourvues de chiffrement, et un niveau sécurisé dans lequel les fonctions appelées par les méthodes natives sont protégées, par exemple par chiffrement des données qu'elles manipulent. Un plus grand nombre de niveaux de sécurité peut également être implémenté. Par exemple, le terminal de communication peut être activé dans un mode non sécurisé, dans un premier mode sécurisé avec chiffrement faible impactant faiblement les performances du terminal, et dans un deuxième mode très sécurisé avec un chiffrement fort impactant davantage les performances.

Selon une mise en oeuvre du procédé de sécurisation selon l'invention, ladite nouvelle application est créée par duplication d'un processus initial exécuté sur le terminal, et l'affectation des pointeurs de fonctions aux méthodes natives est exécutée dans la machine virtuelle du nouveau processus créé à l'issue de ladite duplication.

Selon une mise en oeuvre du procédé de sécurisation selon l'invention, l'affectation des pointeurs de fonctions aux méthodes natives est effectuée dans la machine virtuelle du processus initial dès que l'utilisateur modifie le niveau de sécurité du terminal. Ainsi, toutes les applications lancées à partir d'une duplication du processus initial héritent systématiquement des pointeurs modifiés et adoptent ainsi le nouveau comportement de sécurité choisi par l'utilisateur sans devoir modifier les pointeurs lors de l'instanciation d'une nouvelle application.

Selon une mise en oeuvre du procédé de sécurisation selon l'invention, un gestionnaire d'application est exécuté dans un processus différent du processus initial, ledit gestionnaire transmettant un message à destination du processus initial pour commander la duplication dudit processus initial lors de l'instanciation d'une application, le niveau de sécurité étant transmis sous la forme d'un paramètre dans ledit message, l'étape d'affectation des pointeurs de fonctions aux méthodes natives étant effectuée en fonction de la valeur dudit paramètre. Selon ce mode de réalisation l'affectation des pointeurs est effectuée dynamiquement en fonction du mode de sécurité choisi.

Selon une autre mise en oeuvre du procédé de sécurisation selon l'invention, une pluralité de processus initiaux est créée, chaque processus étant associé à un niveau de sécurité sélectionnable par l'utilisateur, l'étape d'affectation étant exécutée dans au moins un desdits processus pour affecter aux méthodes natives des pointeurs sur des fonctions sélectionnées en fonction d'un niveau de sécurité associé au dit processus, un gestionnaire d'application étant exécuté dans un processus différent desdits processus initiaux, ledit gestionnaire transmettant un message à destination de l'un desdits processus initiaux pour commander la duplication dudit processus initial lors de l'instanciation d'une application, ledit processus initial vers lequel est transmis le message étant choisi en fonction du niveau de sécurité sélectionné par l'utilisateur. Selon ce mode de réalisation, l'affectation des pointeurs aux méthodes natives est effectuée une fois au démarrage dans chacun des processus initiaux pour lesquels le niveau de sécurité n'est pas le niveau de sécurité par défaut du terminal (souvent non sécurisé par défaut).

Au moins l'une des méthodes natives dont l'affectation de pointeur est modifiée en fonction du niveau de sécurité choisi par l'utilisateur peut être une méthode de stockage de données et/ou d'échange de données avec un autre appareil informatique. Ce choix permet d'éviter la récupération de données confidentielles en clair.

Les méthodes natives peuvent appartenir à une classe implémentée dans un langage différent que celui dans lequel les fonctions sur lesquelles ces méthodes natives pointent sont implémentées.

L'invention a également pour objet un terminal de communication mobile apte à exécuter des applications sur une machine virtuelle faisant interface entre lesdites applications à exécuter et un système d'exploitation, la machine virtuelle exécutant des méthodes natives configurées pour pointer sur des fonctions compilées hors machine virtuelle et susceptibles de manipuler des données sensibles, **caractérisé en ce qu'il** comporte des moyens permettant à l'utilisateur de choisir un niveau de sécurité des applications à lancer sur le terminal, et en ce qu'il est apte à modifier les pointeurs de fonctions associés aux dites méthodes natives pour faire pointer lesdites méthodes natives sur des fonctions choisies en fonction du niveau de sécurité sélectionné par l'utilisateur.

Avantageusement, le terminal selon l'invention est configuré pour produire un indicateur de sécurité à l'utilisateur, l'aspect - visuel, auditif ou tactile par exemple - dudit indicateur étant dépendant du mode de sécurité dans lequel est activé l'application en cours d'utilisation.

Selon une mise en oeuvre du terminal sécurisé selon l'invention, le système d'exploitation du terminal est le système « Linux », la machine virtuelle étant l'environnement d'exécution « Dalvik™ ».

D'autres caractéristiques apparaîtront à la lecture de la description détaillée donnée à titre d'exemple et non limitative qui suit faite en regard de dessins annexés qui représentent :
- la figure 1, un schéma illustrant l'architecture d'un terminal sécurisé selon l'invention;
- la figure 2, un schéma illustrant les étapes d'un procédé selon l'invention ;
- la figure 3, un schéma illustrant une deuxième mise en oeuvre du procédé selon l'invention.

Par la suite, l'exemple développé sera celui d'un terminal pourvu du système « Android™ » ; néanmoins l'invention peut s'appliquer à d'autres types de terminaux, notamment ceux s'appuyant sur une machine virtuelle java ou .NET.

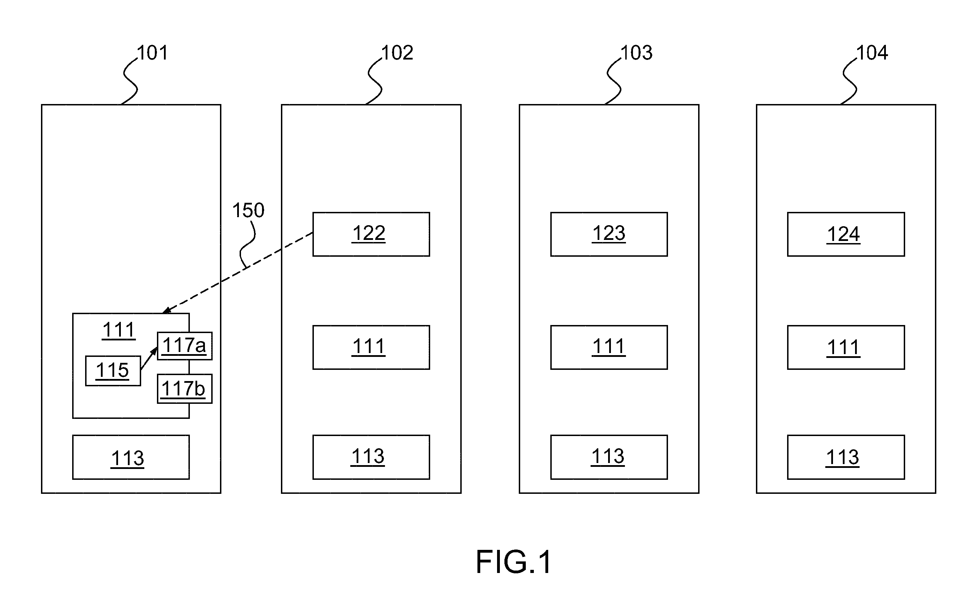

La figure 1, illustre l'architecture d'un terminal sécurisé selon l'invention. A l'état initial, le terminal démarre le processus nommé « Zygote », qualifié par la suite de « processus initial » 101. Il s'agit du premier processus Dalvik exécuté par le terminal. Tous les autres processus 102, 103, 104 exécutés sur le terminal sont issus de ce processus initial 101. Le deuxième processus 102 démarré sur le terminal est le processus « system server ». Ce deuxième processus 102 héberge les services du système et notamment un gestionnaire d'applications 122, lequel est un intermédiaire systématique à l'instanciation d'une application 123, 124 dans de nouveaux processus 103, 104. Ce gestionnaire permet notamment de vérifier que l'application 103, 104 à exécuter existe bien et que l'utilisateur souhaitant la lancer en possède bien les droits d'exécution.

Le processus initial 101 exécute une machine virtuelle 111. Cette machine virtuelle 111 fait partie d'un environnement d'exécution qui comprend un ensemble de fonctions et de méthodes à la disposition des développeurs d'application sur la machine virtuelle. Par exemple, pour un terminal de type « Android™ », l'environnement d'exécution utilisé est nommé « Dalvik™ ». La machine virtuelle 111 instancie des classes comprenant parfois des méthodes natives 115, c'est-à-dire des méthodes pointant sur des fonctions 117a dont le code n'est pas exécuté par la machine virtuelle, mais directement par le processeur du terminal, au besoin en s'aidant de services offerts par le système d'exploitation 113. Ces fonctions 117a sont généralement fournies sous la forme de «bibliothèques de fonctions ». Certaines classes comprennent des méthodes natives 115 sensibles du point de vue de la sécurité, par exemple les méthodes d'enregistrement de données sur un disque dur du terminal ou les méthodes de gestion des communications entre deux terminaux. Lorsque les données sont confidentielles, leur enregistrement sur le disque peut constituer un risque pour la sécurité en cas de perte ou de vol du terminal.

Afin de permettre à un utilisateur de bénéficier d'un mode de fonctionnement classique (non sécurisé) et d'un mode sécurisé, le procédé selon l'invention permet d'exécuter les applications reposant sur l'environnement d'exécution en mode non sécurisé ou en mode sécurisé, selon le contexte d'utilisation, l'état de l'équipement ou les besoins de l'utilisateur. Dans le mode non sécurisé, les fonctions habituelles 117a sont utilisées et les données enregistrées sur le disque du terminal ne sont pas chiffrées. Dans le mode sécurisé, certaines opérations exécutées sur le terminal sont sécurisées ; plus précisément une version sécurisée 117b des fonctions est utilisée : par exemple, les données enregistrées sur le disque dur du terminal sont chiffrées. Selon une mise en oeuvre du procédé selon l'invention, le terminal peut être activé alternativement selon une pluralité de modes de sécurité allant du mode non sécurisé jusqu'au mode très sécurisé.

Ainsi, un terminal sécurisé selon l'invention comprend, au niveau de l'environnement d'exécution du terminal, plusieurs versions 117a, 117b de mêmes fonctions sur lesquelles pointent des méthodes natives 115. Ces méthodes natives 115 sont, dans l'exemple, appelées par des objets instanciés par la machine virtuelle 111, et les fonctions 117a, 117b sur lesquelles elles pointent s'appuient sur des bibliothèques de fonctions fournies par le système d'exploitation 113.

Lorsque l'utilisateur souhaite modifier le niveau de sécurité appliqué au terminal, il active une interface du terminal, par exemple une icône graphique liée à une application chargée de la gestion du mode de sécurité du terminal. Une fonction, par exemple fournie par le gestionnaire d'application 122, permet de modifier un indicateur (une variable) stocké en mémoire vive pour identifier le mode de sécurité activé. Selon un mode de réalisation du terminal sécurisé selon l'invention, cet indicateur de sécurité est enregistré sur un disque dur du terminal pour qu'à l'activation de ce terminal, celui-ci conserve le dernier mode de sécurité en vigueur lors de la dernière session ouverte par l'utilisateur.

Selon un mode de réalisation du terminal selon l'invention, cet indicateur est par ailleurs rendu perceptible de l'utilisateur (par des moyens visuels, audio, tactiles, par exemple), pour lui signifier l'état de l'application avec laquelle il interagit, autrement dit le mode de sécurité dans lequel elle est exécutée. Cet indicateur peut être qualifié « d'indicateur de sécurité ». Idéalement, cet indicateur de sécurité est implémenté en utilisant des ressources particulières de l'équipement (par exemple une zone réservée de l'écran, une diode électroluminescente), ces ressources étant sous le contrôle exclusif d'une portion de code de sécurité. Une implémentation possible consiste à loger ce code dans la partie la plus sécurisée du système d'exploitation 113, à savoir son « noyau » (souvent appelé « kernel » selon la terminologie anglo-saxonne) et à réserver l'utilisation de ce code à des processus tels que le processus zygote (c'est-à-dire le processus initial) qui sont dûment habilités à l'utiliser. Cette précaution permet de prévenir une utilisation malveillante de ce code pour induire l'utilisateur en erreur sur l'état de sécurité courant du terminal ou de l'application avec laquelle il agit.

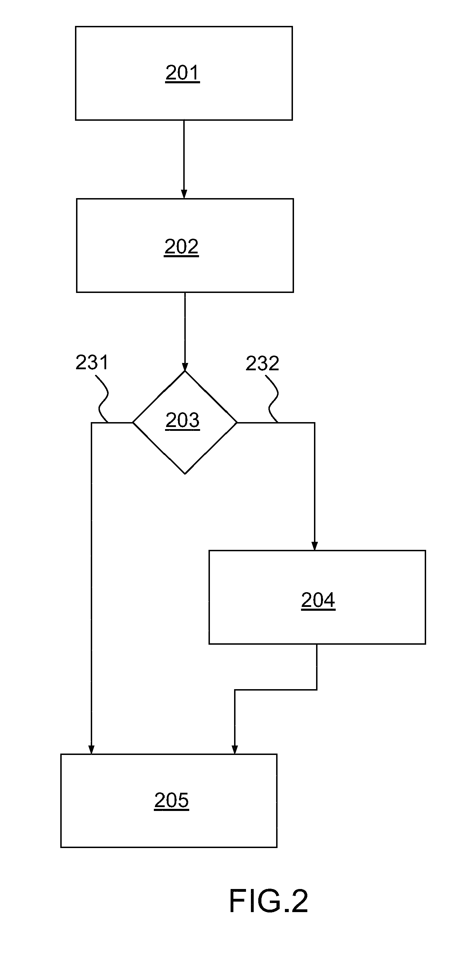

La figure 2 illustre, en relation avec la figure 1, les étapes d'un exemple de procédé selon l'invention. Dans un premier temps 201, lorsqu'une application doit être lancée, le gestionnaire d'application 122 exécuté par le processus « system server », envoie un message 150 vers la machine virtuelle 111 du processus initial. Ce message 150 permet la transmission d'un ordre au processus initial de se dupliquer pour créer un nouveau processus hébergeant l'application à lancer. Chaque application s'exécute dans un processus issu d'une duplication du processus initial. Cette duplication 202 est effectuée, par exemple sous le système d'exploitation Linux, à l'aide de la fonction fork(). Le nouveau processus ainsi lancé hérite de tous les paramètres propres au processus initial.

Selon un mode de réalisation du terminal sécurisé selon l'invention, le paramètre définissant le mode de sécurité en cours - par exemple « sécurisé » ou « non sécurisé » - est transmis dans le message 150 de création d'un nouveau processus.

Ensuite un test 203 est exécuté. Si le niveau de sécurité sélectionné est le niveau « non sécurisé » 231 - c'est-à-dire le mode correspondant au fonctionnement classique du terminal -, l'application fait appel aux méthodes natives classiques et son comportement est ainsi identique à celui d'une application exécutée sur un terminal classique. A contrario, si le niveau de sécurité sélectionné est un niveau « sécurisé » 232, l'application fait appel à des méthodes natives sécurisées. Ainsi, pour les méthodes choisies comme sensibles du point de vue de la sécurité - par exemple la méthode write() destinée à écrire un fichier sur un support d'enregistrement -, au moins deux versions de ces méthodes cohabitent sur le même terminal.

Afin de sélectionner l'une ou l'autre de ces versions, des instructions spécifiques sont exécutées 204 par le processus fils créé après la duplication du processus initial 101. Ces instructions permettent de redéfinir les liens entre les méthodes natives sensibles du point de vue de la sécurité et les fonctions vers lesquelles elles pointent. Autrement dit, pour chaque méthode exécutée par la machine virtuelle dite « sensible », le procédé détermine, en fonction du paramètre définissant le niveau de sécurité, quelle est la fonction sur laquelle doit pointer cette méthode sensible : soit la version sécurisée, soit la version classique.

A titre d'illustration, un exemple de pseudo-code dans le cas d'un terminal ne comportant que deux niveaux de sécurité est donné ci-après :
*pid* = *fork()* // *pid est l'identifiant du processus permettant de savoir si* // *le processus en cours est le processus père ou le fils*
*si pid* == *0 {*
// *processus fils (issu de la duplication du processus initial)*
*si niveau_de_securite* == *HAUT*
*alors réenregistrer les méthodes natives en version sécurisée*
*sinon*
*laisser les méthodes natives classiques être appelées*
*}*
*sinon*
// *processus père (processus initial)*

En outre, selon une mise en oeuvre du procédé selon l'invention, l'affectation d'un pointeur de fonction à une méthode native est interdite une fois que cette méthode native a déjà été associée à une fonction sécurisée. Cette précaution permet notamment d'éviter des programmes malveillants d'opérer des réaffectations de pointeurs visant à associer des méthodes natives sensibles à des fonctions non sécurisées pendant que le mode sécurisé du terminal est activé.

Une fois l'affectation 204 des pointeurs effectuée, l'application peut s'exécuter 205 dans le mode choisi par l'utilisateur. Il est à noter qu'à un instant donné, des applications en mode sécurisé peuvent être exécutées en parallèle avec des applications en mode non sécurisé. En effet, une fois le mode de sécurité modifié, les applications qui avaient été lancées avec le mode précédent continuent leur exécution sans être affectées par le changement de mode.

Par ailleurs, certaines applications peuvent être configurées pour ne s'exécuter qu'en mode sécurisé. Lorsque le code source de l'application est disponible au développeur, l'application peut être modifiée pour effectuer cette vérification lors de son lancement. Lorsque le code de l'application n'est pas modifiable, cette option peut, par exemple, être mise en oeuvre par le gestionnaire d'application 122, lequel maintient par exemple une table définissant des conditions de sécurité à respecter au lancement des applications, puis est chargé de vérifier que l'application respecte les conditions établies préalablement. Ces modes de protection des applications peuvent être utilisées conjointement ou alternativement.

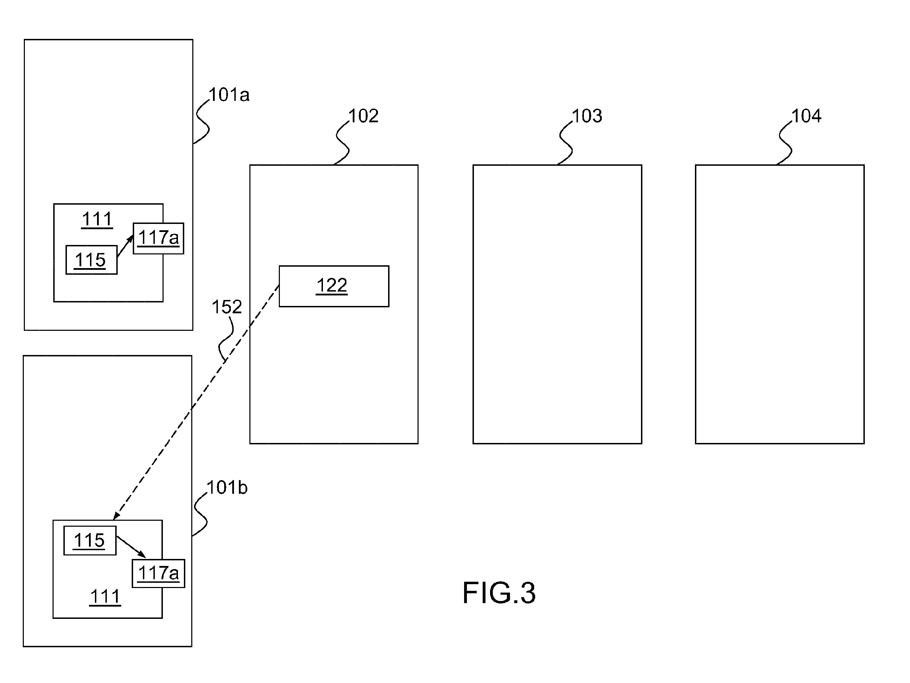

Selon une autre mise en oeuvre du procédé sécurisé selon l'invention, illustrée en figure 3, le terminal crée au démarrage deux versions différentes 101a, 101b du processus initial 101, une première version 101a étant non sécurisée, et deuxième version 101b étant sécurisée : les instructions spécifiques 204 sont exécutées une fois pour toute dans le processus 101b, et le gestionnaire d'applications du processus 102 est configuré pour sélectionner la première version, non sécurisée, du processus 101 a ou la deuxième version, sécurisée, du processus 101 b au moment de la transmission d'un message 152 de lancement d'une application.

## Revendications

1. Procédé de sécurisation d'un terminal de communication mobile apte à exécuter des applications (123, 124) sur une machine virtuelle (111) faisant interface entre lesdites applications à exécuter (123, 124) et un système d'exploitation (113), la machine virtuelle (111) exécutant des méthodes natives (115) configurées pour pointer sur des fonctions (117a, 117b) exécutées hors machine virtuelle et susceptibles de manipuler des données sensibles, le procédé étant **caractérisé en ce qu'il** comprend une étape d'affectation (204) aux dites méthodes natives de pointeurs sur des fonctions (117a, 117b) sélectionnées en fonction d'un niveau de sécurité choisi par l'utilisateur dudit terminal.

2. Procédé de sécurisation selon la revendication 1, ladite nouvelle application étant créée par duplication d'un processus initial (101) exécuté sur le terminal, dans lequel l'affectation (204) des pointeurs de fonctions (117a, 117b) aux méthodes natives (115) est exécutée dans la machine virtuelle (111) du nouveau processus (103, 104) créé à l'issue de ladite duplication.

3. Procédé de sécurisation selon la revendication 2, dans lequel l'affectation des pointeurs de fonctions aux méthodes natives est effectuée dans la machine virtuelle (111) du processus initial (101) dès que l'utilisateur modifie le niveau de sécurité du terminal.

4. Procédé de sécurisation selon la revendication 2 ou 3, dans lequel un gestionnaire d'application (122) est exécuté dans un processus différent (102) du processus initial (101), ledit gestionnaire (122) transmettant un message à destination du processus initial (101) pour commander la duplication dudit processus initial (101) lors de l'instanciation d'une application, le niveau de sécurité étant transmis sous la forme d'un paramètre dans ledit message (150), l'étape d'affectation (204) des pointeurs de fonctions aux méthodes natives étant effectuée en fonction de la valeur dudit paramètre.

5. Procédé de sécurisation selon la revendication 1, dans lequel une pluralité de processus initiaux (101 a, 101b) est créée, chaque processus étant associé à un niveau de sécurité sélectionnable par l'utilisateur, l'étape d'affectation (204) étant exécutée dans au moins un desdits processus pour affecter aux méthodes natives des pointeurs sur des fonctions sélectionnées en fonction d'un niveau de sécurité associé au dit processus, un gestionnaire d'application (122) étant exécuté dans un processus différent (102) desdits processus initiaux (101a, 101b), ledit gestionnaire (122) transmettant un message (152) à destination de l'un desdits processus initiaux (101a, 101 b) pour commander la duplication dudit processus initial (101a, 101b) lors de l'instanciation d'une application, ledit processus initial vers lequel est transmis le message (152) étant choisi en fonction du niveau de sécurité sélectionné par l'utilisateur.

6. Procédé de sécurisation selon l'une quelconque des revendications précédentes, dans lequel au moins l'une des méthodes natives (115) dont l'affectation de pointeur est modifiée en fonction du niveau de sécurité choisi par l'utilisateur est une méthode de stockage de données ou une méthode d'échange de données avec un autre appareil informatique.

7. Procédé de sécurisation selon l'une quelconque des revendications précédentes, dans lequel les méthodes natives (115) appartiennent à une classe implémentée dans un langage différent que celui dans lequel les fonctions (117a, 117b) sur lesquelles ces méthodes natives (115) pointent sont implémentées.

8. Terminal de communication mobile apte à exécuter des applications sur une machine virtuelle (111) faisant interface entre lesdites applications à exécuter et un système d'exploitation (113), la machine virtuelle (111) exécutant des méthodes natives configurées pour pointer sur des fonctions compilées hors machine virtuelle et susceptibles de manipuler des données sensibles, **caractérisé en ce qu'il** comporte des moyens permettant à l'utilisateur de choisir un niveau de sécurité des applications à lancer sur le terminal, et **en ce qu'**il est apte à modifier les pointeurs de fonctions (117a, 117b) associés aux dites méthodes natives (115) pour faire pointer lesdites méthodes natives (115) sur des fonctions (117a, 117b) choisies en fonction du niveau de sécurité sélectionné par l'utilisateur.

9. Terminal de communication mobile selon la revendication 8, le terminal étant configuré pour produire un indicateur de sécurité à l'utilisateur, l'aspect dudit indicateur étant dépendant du mode de sécurité dans lequel est activé l'application en cours d'utilisation.

10. Terminal de communication mobile selon la revendication 8 ou 9, dans lequel le système d'exploitation du terminal est le système « linux », la machine virtuelle étant l'environnement d'exécution « Dalvik™ ».
